# EUROPEAN PATENT SPECIFICATION

(11) **EP 0 664 034 B1**
(45) Date of publication and mention of the grant of the patent: **11.07.2001**
(21) Application number: 93920242.0
(22) Date of filing: 23.08.1993
(51) Int. Cl.: G06F 17/60, G07G 1/00

(54) **METHOD AND APPARATUS FOR FILTERING POINT-OF-SALE DATA**
VERFAHREN UND GERÄT ZUM FILTERN VON VERKAUFSSTELLENDATEN
PROCEDE ET APPAREIL PERMETTANT DE FILTRER DES DONNEES RELATIVES A UN POINT DE VENTE

(30) Priority: 09.10.1992 US 960517
(43) Date of publication of application: 26.07.1995
(73) Proprietor: Catalina Marketing International, Inc., St. Petersburg, FL 33716 (US)
(72) Inventor: OFF, George, W., Newport Beach, CA 92660 (US); KATZ, Gary, M., Northbrook, IL 60062 (US)
(74) Representative: Baillie, Iain Cameron
(86) International application number: US9307846
(87) International publication number: WO9409440

(56) References cited:
- WO-A-91/07725
- GB-A- 2 191 069
- US-A- 3 344 406
- US-A- 3 702 989
- US-A- 4 183 086
- US-A- 4 530 051
- US-A- 4 905 080
- US-A- 4 930 093
- US-A- 4 932 485
- US-A- 4 965 763
- US-A- 4 972 504
- US-A- 4 982 346
- US-A- 5 237 498
- US-A- 5 245 533
- PATENT ABSTRACTS OF JAPAN vol. 004 no. 066 (P-011) ,17 May 1980 & JP-A-55 033217 (TOSHIBA CORP) 8 March 1980,

## Description

This invention relates generally to point-of-sale (POS) computer systems and, more particularly to resolving difficulties associated with the processing of point-of-sale data. Point-of-sale computer systems are widely used in retail stores to record sales transactions. These systems have varying levels of complexity and local storage capacity, but have in common the ability to record data relating to each of many sales transactions that take place in a store.

The primary purpose of a point-of-sale system is to provide a record of the accumulated sales transactions in a store. From the record, store management personnel can track sales volumes and revenues by store, by department, by product category, or even by product, since each product sold is entered into the record by product code. A familiar bar code known as the universal product code (UPC) is scanned at a checkout stand, or entered manually if the code is missing or unreadable.

A secondary purpose of a point-of-sale system is to provide additional information computed from the primary record. For example, a common problem is controlling inventory levels to meet customer demand. Theoretically, the point-of-sale record contains all the information needed to enable management personnel to decide how much of any given product needs to be reordered to maintain store inventory at a desired level. A related problem is shelf space allocation in retail stores. Typically, shelf allocation is based on product sales. If a product sells well, more shelf space should be allocated to it in the store, to minimize the possibility of low or empty shelves.

Another category of secondary information contained within the primary point-of-sale record is concerned with research into customer behavior. This includes research into mass customer behavior, such as determining the number of customers who bought a specific product that was the subject of a promotion program, and research into individual customer behavior, such as determining whether a customer should be given a discount coupon for a product, based in part on the customer's present or prior purchase activity.

Although these secondary uses of point-of-sale data hold promise for store owners and managers, in fact there has been very little use of point-of-sale data for other than the primary purpose of tracking sales volume and revenues of the store. The principal reason is that large point-of-sale systems simply provide too much data for many practical purposes. Inventory control is still usually handled by placing a fixed weekly or other periodic order with product vendors, and occasionally modifying the order based on long-term trends in inventory levels and any anticipated peaks in demand. Shelf allocation is usually handled more or less intuitively, or using out-of-date product sales information that is eventually derived from the point-of-sale data. Using point-of-sale data for consumer research is also rendered difficult by the large volume of data that has to be analyzed to obtain the desired information.

One known modular point-of-sale system is described in the May 1991 International Patent Publication WO 91/07725 of Viata Corporation. This system maintains current transaction screening data and complete transaction data at each point-of-sale processor which provides service to a community of point-of-sale terminals. A wide variety of different customer transactions can be processed without reference to a remote authorization computer. However, this system is merely concerned with transaction screening in the limited sense of dealing with credit verfiication (e.g., Visa and Mastercard credit authorizations) and related reports for each transaction. There is no concern for reducing the difficulty of later processing large amounts of sale event data.

GB-A-219069 discloses a PC to filter out some of the data in a data record received over a common data stream from a stock exchange so as to exclude irrelevant data, and then to display remaining data on the display of a PC. More specifically, the reference discloses filtering the data for a single record to reduce the amount of data displayed.

US-A-4982346 discloses a computer system for facilitating marketing.

It will be appreciated from the foregoing that a serious problem faces store owners and managers who wish to use point-of-sale data for such applications as inventory control, shelf allocation control, and various forms of consumer research. The volume of collected data is so great that efficient processing for applications such as these has not been realized. The present invention provides a solution to this problem.

According to a first aspect of this invention there is provided an apparatus as claimed in claim 1 and according to a further aspect of the invention there is provided a method as claimed in claim 11 herein.

The present invention resides in a point-of-sale computer system that captures only carefully selected elements of the sales data at the point of sale, and allows the selection of data to be easily modified to meet the needs of various applications. The system of the invention has a clear advantage over earlier point-of-sale systems, which cannot be easily modified, or cannot be modified at all, at the point of sale. Capturing only selected data has a related benefit in that less storage capacity is needed at the point of sale and in the overall system, and telecommunications costs are reduced, compared with a system that must log every event at the point of sale.

Briefly, the method of the invention comprises the steps of determining whether a point-of-sale data processing system has any input to be processed; and if there is input to be processed, filtering input event data at the point of sale, to determine whether each input event should be logged; and then logging selected input event data records, as determined by the filtering step. Filtering at the point of sale facilitates derivation of secondary data from the event data records. The method comprises, prior to the filtering step, determining whether filtering has been activated for this point-of-sale system. In the illustrative embodiment of the invention, a plurality of filter test types are provided, and the method further includes the step of preselecting from among the filter test types for use in the filtering step. The filtering step yields event data records for logging in a separate log associated with each filter test type.

Also in the illustrative embodiment, the filter test types include an item filter, and the filtering step includes examining an item record associated with the input event, and selecting the item record only if a particular field of the item record matches preselected filter requirements. The item filter can be used for inventory control; to control shelf space allocation; or to monitor sales performance of a selected product or group of products. The filter types may also include a cashier filter, to capture events relating to cashier activity; a system filter, for capturing events relating to system events and errors; a tendering activity filter, for capturing events relating to the customer's tendering of payment; a consumer diary filter, for capturing events relating to specific customer activity; a random purchase filter, for capturing events that occur over a specified random time period or a number of customer transactions; or a user filter, for capturing events in accordance with user-specified register location or time constraints.

Each of these filter options has subset of further options that are used to implement specific applications. For example, the consumer diary filter allows capture of data relating to the entire purchase of a customer. Logging can be of summary information, such as number and type of product items purchased, or it can be in more detail, depending on the level of analysis desired. Typically, a customer identification number is logged with the purchase data, and coupon printing may be triggered at the end of the transaction, or in a later transaction, based on analysis of the items purchased by the customer.

In terms of novel apparatus, the invention comprises means for determining whether a point-of-sale data processing system has any input to be processed; means operable only if there is input to be processed, for filtering input event data at the point of sale, to determine whether each input event should be logged; and means for logging selected input event data records, as determined by the means for filtering. Filtering at the point of sale greatly facilitates derivation of data from the event data records, for a variety of applications. The invention may also be defined as apparatus in terms of similar scope to the method claims summarized above.

It will be appreciated from the foregoing that the present invention represents a significant advance in the field of point-of-sale systems. In particular, the invention facilitates analysis of point-of-sale data because the data elements are selectively filtered for capture at the point of sale. Various filter types permit the filtering and capture of event data to be used for a variety of functions. An item filter facilitates capture of events for purposes of analyzing sales of a particular item or items. Captured item transactions can be used for applications including price sensitivity analysis, inventory control, shelf space allocation, and the effect of sales promotions. Other aspects and advantages of the invention will become apparent from the following more detailed description, taken in conjunction with the accompanying drawings.
FIGURE 1 is a block diagram illustrating the principal hardware components of a point-of-sale system in which the invention is used;
FIG. 2 is diagram showing the principal functions performed by the point-of-sale system, including a filter process that is the essence of the present invention;
FIG. 3 is diagram showing the functions performed by the filter process referred to in FIG. 2; and
FIGS. 4(a) through 4(g) are a set of diagrams depicting examples of various log records used in the system of the invention.

As shown in the drawings for purposes of illustration, the present invention is concerned with techniques for capturing data in a point-of-sale computer system. Although point-of-sale systems have been widely used for some years, their full potential has not been realized, principally because of the extremely large volume of data that must be captured in retail stores.

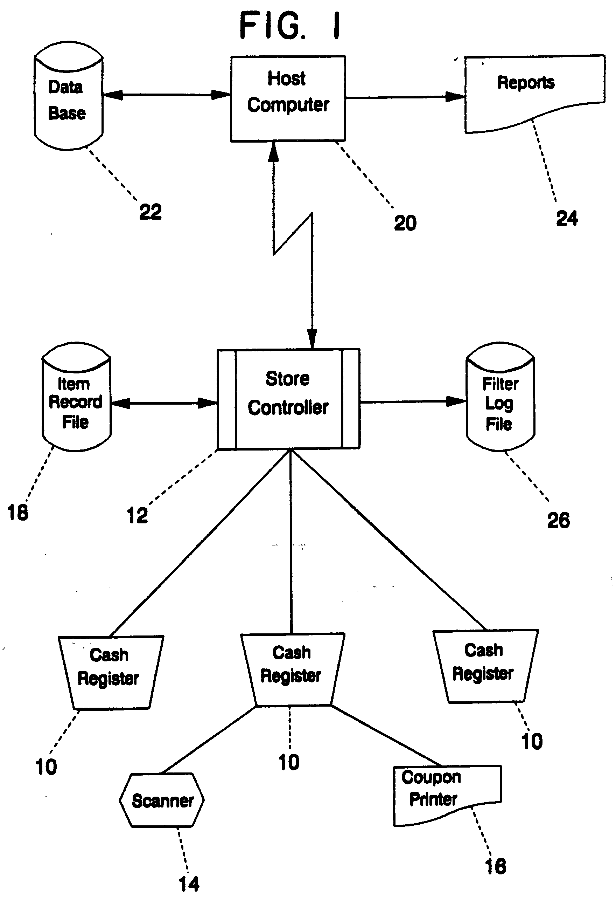

FIG. 1 shows the principal hardware components of a point-of-sale system, including multiple cash registers, indicated by reference numeral 10, connected to a store controller 12. Each cash register has a scanner 14, and may have a coupon printer 16 for printing discount coupons at the checkout register. The store controller 12 has access to a number of computer files, one of which is an item record file 18, which contains a record for every item sold in the store. In the item record file 18, every item is identified by its Uniform Product Code (UPC), its price, and various other data fields relating to the item.

In large retail stores, the store controller 12 is linked to a host computer 20, usually at a remote site. Data records captured at the cash registers 10 are transmitted to the host computer 20, for further processing in conjunction with a data base 22, and various reports 24 are generated by the host computer. As will be further explained, the store controller 12 of the invention also has a related filter log file 26, in which filtered data items are stored.

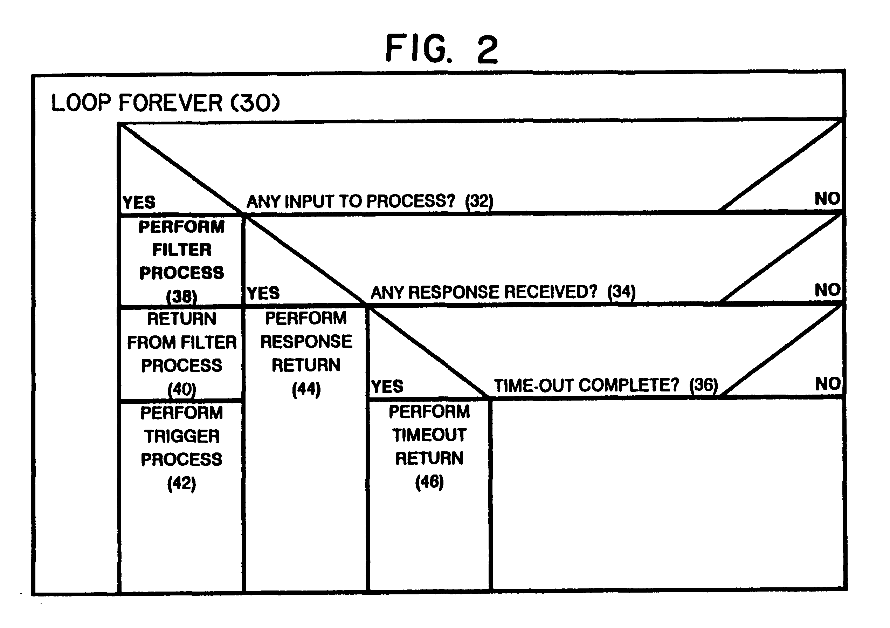

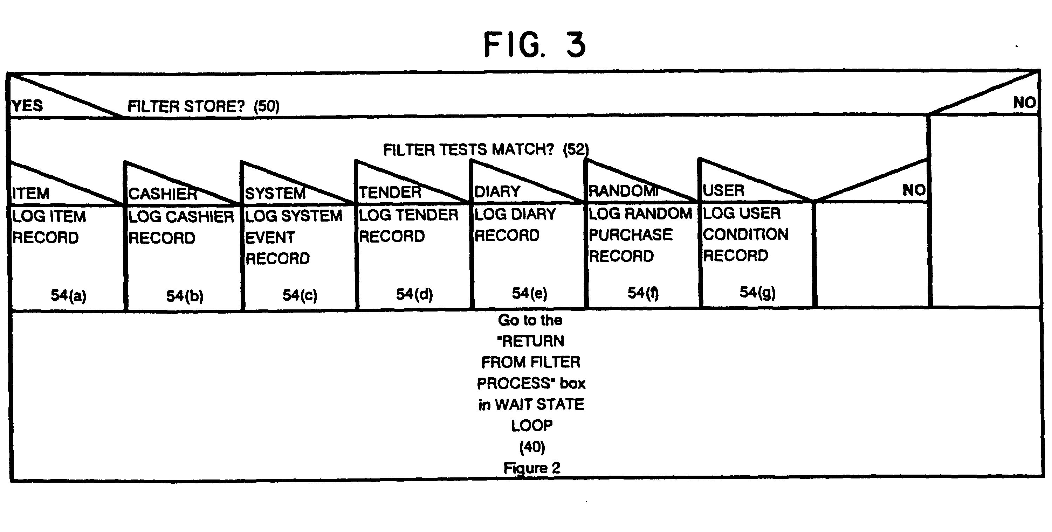

FIG. 2 is a simplified depiction of the functions performed in a wait-state loop of the point-of-sale system of the invention. FIGS. 2 and 3 both utilize a charting method used in structured system development and known in the data processing industry as either "Nassi-Sniderman" charts or "Chapen" charts. Charts of this type contain the same information as conventional flowcharts, but are believed to eliminate redundant, inconsistent and incomplete logic within programs. The conventions employed in these charts are relatively simple. Each chart is read serially from top to bottom. A binary condition is represented by a question stated in a block of the chart, with a "yes" or "no" response indicated at opposing sides of the block, separated from the main body of the block by a diagonal line. The "yes" or "no" path from the binary condition block can be found by simply following the "yes" or "no" portion of the block to the next adjacent block. The chart differs from a conventional flowchart in that function blocks are not separated by "paths" but are placed in adjoining relationship to indicate the direction of logic flow.

The wait-state loop shown in FIG. 2 has an outer frame 30 that carries the implication that the functions within the frame are performed repeatedly in an infinite processing loop. Basically, the loop poses three questions. In block 32, the system checks to determine if there is any input to process; in block 34 the system checks to determine if a response has been received; and in block 36 the system checks to determine if a time-out is complete. If the answer to any of these questions is "no," as indicated in the right-hand side of the respective blocks, processing continues with the next question in sequence and, after the last block 36, processing returns to the first block 32 again.

If there is input to process, this is the function of the present invention, and a filter process is performed, as indicated at 38, and as further explained with reference to FIG. 3. After return from the filter process, indicated at 40, the system may also perform a trigger process, indicated at 42, to determine if a product that is the subject of a current transaction is a "trigger product" for which some special action needs to be taken. A trigger product is a preselected product involved in a store promotion, which may require the printing of a discount coupon at the cash register.

If a response has been received, as determined in block 34, a response return process may have to be performed, as indicated at 44, and if a time-out is complete a time-out return will be performed, as indicated at 46. Processing of response returns time-out returns, and trigger products do not form part of the present invention, and are mentioned only for completeness.

The filter process of the invention, as shown in FIG. 3, includes a preliminary test to determine whether this is a store that is using the filter process, as indicated in block 50. This test permits a standardized system to be installed in all stores, but for the stores to activate the filter process selectively. If the store is not one employing the filter process, this is the end of filter processing and a return is made to the wait-state loop of FIG. 2. It should be noted that a block of the chart that is completely blank is a no-operation block, and the processing logic path continues through the block to next block immediately below the blank one.

If the store has the filter process activated, the next step in the process is to determine which, if any, of several filter tests match, as indicated in block 52. The filter process, when activated, is selected to filter data based on one or more testing criteria. The first, and perhaps most important, of these criteria is the item level test, based on the Uniform Product Code of the items being purchased. The item level test can be for a specific item, or for a group of items, such as all items supplied by a specific manufacturer, or all items in a specific category. The action taken if an item matches is to log an item record, as indicated in block 54(a). Other actions, for other types of tests, are described below and are indicated in blocks 54(b) through 54(g). If no tests match, return is made to the wait-state loop of FIG. 2.

The types of filter tests are as follows:
(a) Item test, based on the UPC of each item purchased. The UPC includes a manufacturer's code that can be used to filter the point-of-sale data to a specific manufacturer, or to a specific category of items, or to a specific item. Advantages of an item filter are discussed further below.
(b) Cashier test, allows logging of specific activities that occur during the sales process. These filters can be used to monitor security situations, such as voided transactions, over-rings, and manager overrides. They can also be used to collect data on operator performance or used to feed data to a time and attendance system.
(c) System test, allows the logging of specific system activities that can reflect on the performance of the store system, both human and computer. Events such as "loop errors" (the failure of a message to successfully flow from the cash register to the store controller), terminal reloads, and so forth, can be logged and monitored. Events such as a price change at the register, or item-not-on-file during check-out can be used as an audit of how well manual procedures are being performed by the retail organization.
(d) Tender test, allows the logging of events that occur during electronic tendering transactions. Specific response filters can be set to measure the performance of outside service providers, such as for check and credit authorization. For example, authorization time-outs and "call-center" for authorization have a direct impact on customer service. Another example is an "off-line" negative file built from the on-line "decline responses," i.e. responses for authorizations that are declined. Specific decline codes for a customer card number may be used to update such a negative file. If the in-store system is not able to communicate with the authorizer, it would be able to look at this negative file to determine if this card holder had ever been declined by an on-line transaction.
(e) Diary test, allows collection of information relating to an entire customer's purchase. This alignment of customer orders allows for later detailed "market basket" analysis of items purchased. The logging can be customer order summary information (i.e., number of items, department distribution, or class analysis), or it can be down to the detail item information level depending upon the type of analysis desired. This filter will also allow the sale of information to companies who perform "panel diary" studies based on customer purchase data. In this case, a customer identification number is also logged with detail item and tendering information.
   In addition to the issuance of coupons, manufacturers sometimes distribute product samples to consumers to promote their products. Distribution can be made in stores, on street corners, or by mail, and can be best described as a costly and unfocused approach, from a marketing standpoint, since products may be given to people who are unlikely to want them or use them. A more focused approach is to use the present invention in conjunction with triggered coupons. When a consumer is identified from a panel diary study, or when a consumer with a frequent shopper identification makes purchases that identify the consumer as a candidate for target marketing, the consumer's name is added to a special mailing list for specific manufacturer samples. This filtered product sampling would provide greater exposure to the consumers most likely to purchase the product, at a lower cost.
(f) Random test, based on external parameters and not exclusively on data collected at the cash registers. For example data may be logged over a period determined by a random timer or customer counter that provides a statistically significant sample of customer sales activities. The limited data sample can then be used to help predict future sale activity.
(g) User condition test, defined by the store user to log data of specific interest. For example a store manager may be concerned about activity at a particular register or registers during a specific period, such as the activity of a patio register during a sidewalk sale, the activity of a specific cashier, or overall sales at all registers during specific time periods. This data would be logged and then processed by a subsequent reporting system.

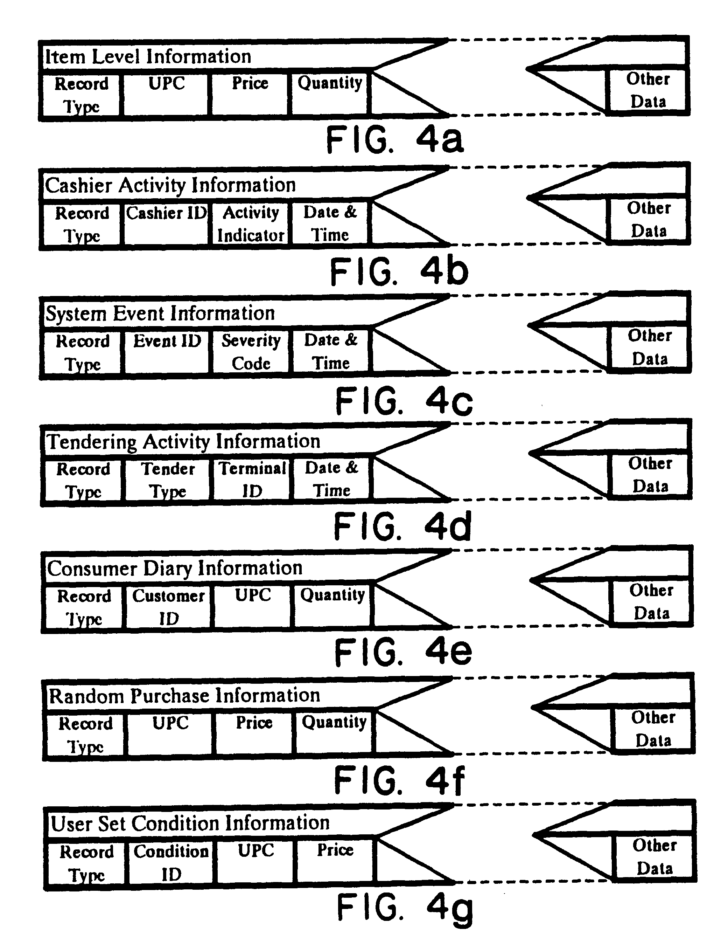

FIGS. 4(a)-4(g) are typical filter record log formats used in conjunction with the filter tests (a) through (g), respectively. For the item filter, the fields recorded may include the record type (to distinguish the record from those resulting from different filter types), the UPC of the item, the price of the item, and the quantity involved in the transaction. For the cashier activity filter, such data as the cashier identification, an activity indicator, and the date and time of the recorded event, are recorded in the log record. For the system event filter, the data recorded may include an event identifier, an error severity code, and a date and time. For the tendering activity filter, the data may include a tender type, a terminal identifier, and a date and time. For the consumer diary filter, a detailed form of the data may include a customer identifier, the UPC and the quantity purchased. A less detailed log record for the consumer diary may be based on numbers of items and a product type or department distribution, rather than on UPC for each item purchased. For the random test, the log record includes UPC, price and quantity data over the period of logging. Finally, for the user test, the log record includes a condition identifier, the UPC and the price.

The use of an item filter provides information on the movement of specific products that can support the buying or reordering process. The information can be used with a computer reorder system, or provided to a human responsible for buying, or provided to a vendor. A generalized filter allows the logging of all item movement level information, so that it can be analyzed later by another system. Some of the potential benefits of having this information are discussed below.

Timely information concerning the movement of specific products improves stock availability by giving the retailer or vendor a warning when on-hand stock levels are lower than the expected demand. Instead of operating on a fixed delivery schedule, the retailer can react quickly to changes in demand for selected products.

The related problem of shelf space allocation is also easier to handle if timely information on the sales of selected products is available to the retailer. Ideally, out-of-stock conditions can be eliminated for key selected items.

It has been estimated that over ten thousand new products are introduced each year in retail stores. Each new item typically has only a very short time in which to demonstrate its marketing viability. With appropriate item selections, filtered sales data allow manufacturers to obtain specific product performance, either alone or in conjunction with complementary products.

Sales data for specific items can also help the manufacture to monitor the progress of promotional product displays and the like. The item movement data would allow the manufacturer to determine whether or not a promotional display was built and, if built, the degree of its impact on product sales.

Filtering sales data by item also permits a manufacturer to perform a retail price point sensitivity analysis. This would encourage the establishment of retail prices that promote high manufacturer volume while improving retailer profitability.

It will be appreciated from the foregoing that the present invention represents a significant improvement in techniques for capturing and using point-of-sale data. In particular, the invention provides for selectively filtering data at the point of sale, rather than collecting a large volume of data for later analysis. Various types of filters are used, depending on the desired application. Specifically, an item filter can be used to improve stock availability and shelf space allocation, or for other purposes, such as tracking new product performance, tracking promotion display performance, or performing price sensitivity analysis.

It will also be appreciated that, although an example of the present invention has been described in detail for purposes of illustration, various modifications may be made. Accordingly, the invention should not be limited except as by the appended claims.

## Claims

1. A point of sale system for a retail store, comprising:
(a) a terminal (10, 14, 16) at a customer checkout location, said terminal having cash register means and means for reading product codes on product items in a customer's order;
(b) item record file means (18) for storing price and product identification information for product items;
(c) a store controller (12) with which said terminal can communicate, said store controller being arranged to communicate with said item record file;
characterized by
(d) means (38) for collecting and storing system test data, said system test data collected and stored comprising a log events including at least one of (1) loop error events i.e. the failure of a message to successfully flow from the cash register to the store controller, (2) terminal reload events, (3) price change at the terminal events, and (4) item-not-on-file events.

2. A system according to claim 1 wherein said log of events includes at least two of 1) loop error events, (2) terminal reload events, (3) price change at the terminal events, and (4) item-not-on-file events.

3. A system according to claim 1 wherein said log of events includes at least three of 1) loop error events, (2) terminal reload events, (3) price change at the terminal events, and (4) item-not-on-file events.

4. A system according to claim 1 wherein said log of events includes all of (1) loop error events, (2) terminal reload events, (3) price change at the terminal events, and (4) item-not-on- file events.

5. A system according to claim 1 further comprising means for collecting and storing credit provider authorization time-out data, said time-out data comprising an amount of time-outs received during electronic tendering transactions.

6. A system according to claim 1 further comprising means for collecting and storing credit provider authorization time-out data, said time-out data comprising an amount of time-outs received during electronic tendering transactions, wherein said tendering transactions each involve an electronic request for authorization for credit from a credit provider.

7. A system according to claim 1 further comprising means for uniquely identifying the customer based upon a customer identification number.

8. A system according to claim 1 further comprising customer purchase file means for storing data pertaining to the customer's purchase of products.

9. A system according to claim 1 wherein a coupon signal is generated in response to a tender signal indicating a purchase for printing a discount coupon.

10. A system according to claim 1 wherein said store controller comprising means for performing a filter process for determining selected customer purchase data.

11. A computer implemented method for logging data in a point of sale system of a retail store, said method comprising the steps of:
(a) reading product codes on product items in a customer's order into a terminal at a customer checkout location including a cash register;
(b) storing price and product identification information for product items in an item record file;
(c) accessing an item record file using a store controller in response to signals transmitted from said terminal;
said method characterized by the further step of:
(d) collecting and storing system test data, said system test data collected and stored comprising a log of events including at least one of (1) loop error events i.e. the failure of a message to successfully flow from the cash register to the store controller, (2) terminal reload events, (3) price change at the terminal events, and (4) item-not-on-file events.

12. A method according to claim 11 wherein said log of events includes at least two of 1) loop error events, (2) terminal reload events, (3) price change at the terminal events, and (4) item-not-on-file events.

13. A method according to claim 11 wherein said log of events includes at least three of 1) loop error events, (2) terminal reload events, (3) price change at the terminal events, and (4) item-not-on-file events.

14. A method according to claim 11 wherein said log of events includes all of (1) loop error events, (2) terminal reload events, (3) price change at the terminal events, and (4) item-not- on-file events.

15. A method according to claim 11 further comprising logging credit provider authorization time-out data, said time-out data comprising an amount of time-outs received during electronic tendering transactions.

16. A method according to claim 11 further comprising logging credit provider authorization time-out data, said time-out data comprising time-outs received during electronic tendering transactions, wherein said tendering transactions each involve an electronic request for authorization for credit from a credit provider.

17. A method according to claim 11 further comprising uniquely identifying the customer based upon a customer identification card.

18. A method according to claim 11 further comprising storing data pertaining to the customer's purchase of products.

19. A method according to claim 11 wherein a coupon signal is generated in response to a tender signal indicating a purchase for printing a discount coupon.

20. A method according to claim 11 further comprising performing a filter process for determining selected customer purchase data.

21. A system according to claim 1, further comprising
means for filtering transaction data of items purchased at a point of sale by a customer based upon identification of those items, so that only transaction data for preselected product items is stored.

22. The system of claim 21 wherein said product items are identified by UPC codes and said means for filtering filters based upon UPC code.

23. The system of claim 21 wherein said filtering is based upon identification of manufacturer of each purchased product.

24. The system of claim 21 wherein said filtering is based upon identification of product category of each purchased product.

25. A method according to claim 11, further comprising filtering transaction data of items purchased a point of sale by a customer based upon identification of those items so that only transaction data for preselected product items is stored.

26. The method of claim 25 wherein said product items are identified by UPC codes and said means for filtering filters based upon UPC code.

27. The method of claim 25 wherein said filtering is based upon identification of manufacturer of each purchased product.

28. The method of claim 25 wherein said filtering is based upon identification of product category of each purchased product.

## Revendications

1. Système de point de vente pour un magasin de vente au détail, comprenant :
(a) un terminal (10, 14, 16) au niveau d'un lieu de contrôle de sortie des clients, ledit terminal ayant des moyens formant caisse enregistreuse et des moyens de lecture de codes de produit sur des articles formant produits dans une commande de client ;
(b) des moyens formant fichier d'enregistrement d'articles (18) pour stocker des informations d'identification de produit et de prix pour des articles formant produits ;
(c) une unité de contrôle de stock (12) avec laquelle ledit terminal peut communiquer, ladite unité de contrôle de stock étant conçue pour communiquer avec ledit fichier d'enregistrement d'articles ;
caractérisé par
(d) des moyens (38) pour recueillir et stocker des données de test de système, lesdites données de test de système recueillies et stockées comprenant un journal d'événements incluant au moins l'un (1) d'événements d'erreur, c'est-à-dire la défaillance de l'acheminement réussi d'un message allant de la caisse enregistreuse à l'unité de commande de stockage, (2) d'événements de rechargement de terminal, (3) d'événements de changement de prix au niveau du terminal, et (4) d'événements d'articles inconnus au fichier.

2. Système selon la revendication 1, dans lequel ledit journal d'événements comprend au moins deux (1) d'événements d'erreur, (2) d'événements de rechargement de terminal, (3) d'événements de changement de prix au niveau du terminal, et (4) d'événements d'articles inconnus au fichier.

3. Système selon la revendication 1, dans lequel ledit journal d'événements comprend au moins trois (1) d'événements d'erreur, (2) d'événements de rechargement de terminal, (3) d'événements de changement de prix au niveau du terminal, et (4) d'événements d'articles inconnus au fichier.

4. Système selon la revendication 1, dans lequel ledit journal d'événements comprend la totalité (1) d'événements d'erreur, (2) d'événements de rechargement de terminal, (3) d'événements de changement de prix au niveau du terminal, et (4) d'événements d'articles inconnus au fichier.

5. Système selon la revendication 1, comprenant de plus des moyens pour recueillir et stocker des données de délais d'attente d'autorisation de fournisseur de crédit comprenant un total de délais d'attente rencontrés pendant des transactions électroniques d'offre.

6. Système selon la revendication 1, comprenant de plus des moyens pour recueillir et stocker des données de délais d'attente d'autorisation de fournisseur de crédit, lesdites données de délais d'attente comprenant un total des délais d'attente rencontrés pendant des transactions électroniques d'offre, dans lequel lesdites transactions électroniques impliquent chacune une demande électronique d'autorisation de crédit par un fournisseur de crédit.

7. Système selon la revendication 1, comprenant de plus des moyens pour identifier de manière unique un client sur la base d'un numéro d'identification de client.

8. Système selon la revendication 1 comprenant de plus des moyens formant fichier d'achats de client pour stocker des données se rapportant aux achats de produits d'un client.

9. Système selon la revendication 1, dans lequel un signal de bon est produit en réponse à un signal d'offre indiquant un achat pour imprimer un bon de réduction.

10. Système selon la revendication 1, dans lequel ladite unité de commande de stockage comprend des moyens pour effectuer un processus de filtrage pour déterminer des données sélectionnées d'achats de client.

11. Procédé mis en application par informatique pour inscrire des données dans un journal dans un système de point de vente d'un magasin de vente au détail, ledit procédé comprenant les étapes suivantes :
(a) la lecture de codes de produit sur des articles formant produits dans une commande de client dans un terminal au niveau d'un lieu de contrôle de sortie des clients incluant une caisse enregistreuse ;
(b) le stockage d'informations d'identification de produit et de prix pour des articles formant produits dans un fichier d'enregistrement d'articles ;
(c) l'accès à un fichier d'enregistrement d'articles en utilisant une unité de commande de stockage en réponse à des signaux émis en provenance dudit terminal ;
ledit procédé étant caractérisé par l'étape supplémentaire suivante :
(d) le recueil et le stockage de données de test de système, lesdites données de test de système recueillies et stockées comprenant un journal d'événements incluant au moins l'un (1) d'événements d'erreur, c'est-à-dire la défaillance de l'acheminement réussi d'un message allant de la caisse enregistreuse à l'unité de commande de stockage, (2) d'événements de rechargement de terminal, (3) d'événements de changement de prix au niveau du terminal, et (4) d'événements d'articles inconnus au fichier.

12. Procédé selon la revendication 11, dans lequel ledit journal d'événements comprend au moins deux (1) d'événements d'erreur, (2) d'événements de rechargement de terminal, (3) d'événements de changement de prix au niveau du terminal, et (4) d'événements d'articles inconnus au fichier.

13. Procédé selon la revendication 11, dans lequel ledit journal d'événements comprend au moins trois (1) d'événements d'erreur, (2) d'événements de rechargement de terminal, (3) d'événements de changement de prix au niveau du terminal, et (4) d'événements d'articles inconnus au fichier.

14. Procédé selon la revendication 11, dans lequel ledit journal d'événements comprend la totalité (1) d'événements d'erreur, (2) d'événements de rechargement de terminal, (3) d'événements de changement de prix au niveau du terminal, et (4) d'événements d'articles inconnus au fichier.

15. Procédé selon la revendication 11, comprenant de plus l'inscription dans un journal de données de délais d'attente d'autorisation de fournisseur de crédit, lesdites données de délais d'attente comprenant un total de délais d'attente rencontrés pendant des transactions électroniques d'offre.

16. Procédé selon la revendication 11, comprenant de plus l'inscription dans un journal de données de délais d'attente d'autorisation de fournisseur de crédit, lesdites données de délais d'attente comprenant des délais d'attente rencontrés pendant des transactions électroniques d'offre, dans lequel lesdites transactions d'offre impliquent chacune une demande électronique d'autorisation de crédit par un fournisseur de crédit.

17. Procédé selon la revendication 11, comprenant de plus une identification unique d'un client sur la base d'une carte d'identification de client.

18. Procédé selon la revendication 11 comprenant de plus des données de stockage se rapportant aux achats de produits d'un client.

19. Procédé selon la revendication 11, dans lequel un signal de bon est produit en réponse à un signal d'offre indiquant un achat pour imprimer un bon de réduction.

20. Procédé selon la revendication 11, comprenant de plus un processus de filtrage pour déterminer des données sélectionnées d'achats de client.

21. Système selon la revendication 1 comprenant de plus :
des moyens de filtrage de données de transaction d'articles achetés au niveau d'un point de vente par un client sur la base de l'identification de ces articles, de sorte que seules des données de transaction pour des articles formant produits présélectionnés sont stockées.

22. Système selon la revendication 21, dans lequel lesdits articles formant produits sont identifiés par des codes UPC et lesdits moyens de filtrage filtrent sur la base de codes UPC.

23. Système selon la revendication 21, dans lequel ledit filtrage est basé sur l'identification du fabricant de chaque produit acheté.

24. Système selon la revendication 21, dans lequel ledit filtrage est basé sur l'identification de la catégorie de produit de chaque produit acheté.

25. Procédé selon la revendication 11, comprenant de plus :
le filtrage de données de transaction d'articles achetés dans un point de vente par un client sur la base de l'identification de ces articles de sorte que seules des données de transaction pour des articles formant produits présélectionnés sont stockées.

26. Procédé selon la revendication 25, dans lequel lesdits articles formant produits sont identifiés par des codes UPC et lesdits moyens de filtrage filtrent sur la base de codes UPC.

27. Procédé selon la revendication 25, dans lequel ledit filtrage est basé sur l'identification du fabricant de chaque produit acheté.

28. Procédé selon la revendication 25, dans lequel ledit filtrage est basé sur l'identification de la catégorie de produit de chaque produit acheté.

## Patentansprüche

1. Kassenterminalsystem für ein Einzelhandelsgeschäft, wobei das System folgendes umfasst:
(a) ein Terminal (10, 14, 16) an dem Standort einer Kundenkasse, wobei das genannte Terminal eine Registrierkasseneinrichtung und eine Einrichtung zum Lesen von Produktcodes auf Produktartikeln eines Kundenauftrags aufweist;
(b) eine Artikel-Satzdateieinrichtung (18) zum Speichern von Preis- und Produktkenndaten für Produktartikel;
(c) einen Laden-Controller (12), mit dem das genannte Terminal kommunizieren kann, wobei der genannte Laden-Controller so angeordnet ist, dass er mit der genannten Artikel-Satzdatei kommuniziert;
gekennzeichnet durch
(d) eine Einrichtung (38) zur Erfassung und zum Speichern von Systemtestdaten, wobei die genannten erfassten und gespeicherten Systemtestdaten ein Ereignisprotokoll umfassen, das mindestens eines der folgenden Elemente aufweist: (1) Schleifenfehlerereignisse, d.h. Nachrichten, die nicht erfolgreich von der Registrierkasse zu dem Laden-Controller gelangen, (2) Terminal-Wiederherstellungs-Ereignisse, (3) Ereignisse über Preisänderungen an dem Terminal und (4) Ereignisse für Artikel, die sich nicht in der Datei befinden.

2. System nach Anspruch 1, wobei das Ereignisprotokoll mindestens zwei der folgenden Elemente aufweist: (1) Schleifenfehlerereignisse, d.h. Nachrichten, die nicht erfolgreich von der Registrierkasse zu dem Laden-Controller gelangen, (2) Terminal-Wiederherstellungs-Ereignisse, (3) Ereignisse über Preisänderungen an dem Terminal und (4) Ereignisse für Artikel, die sich nicht in der Datei befinden.

3. System nach Anspruch 1, wobei das Ereignisprotokoll mindestens drei der folgenden Elemente aufweist: (1) Schleifenfehlerereignisse, d.h. Nachrichten, die nicht erfolgreich von der Registrierkasse zu dem Laden-Controller gelangen, (2) Terminal-Wiederherstellungs-Ereignisse, (3) Ereignisse über Preisänderungen an dem Terminal und (4) Ereignisse für Artikel, die sich nicht in der Datei befinden.

4. System nach Anspruch 1, wobei das Ereignisprotokoll alle der folgenden Elemente aufweist: (1) Schleifenfehlerereignisse, d.h. Nachrichten, die nicht erfolgreich von der Registrierkasse zu dem Laden-Controller gelangen, (2) Terminal-Wiederherstellungs-Ereignisse, (3) Ereignisse über Preisänderungen an dem Terminal und (4) Ereignisse für Artikel, die sich nicht in der Datei befinden.

5. System nach Anspruch 1, wobei das System ferner eine Einrichtung zum Erfassen und Speichern von Genehmigungs-Zeitauslösungsdaten zu Kreditgebern, wobei die genannten Zeitauslösungsdaten eine Anzahl der während elektronischen Submissions-Transaktionen empfangenen Zeitauslösungen umfassen.

6. System nach Anspruch 1, wobei das System ferner eine Einrichtung zum Erfassen und Speichern von Genehmigungs-Zeitauslösungsdaten zu Kreditgebern, wobei die genannten Zeitauslösungsdaten eine Anzahl der während elektronischen Submissions-Transaktionen empfangenen Zeitauslösungen umfassen, wobei die genannten Submissions-Transaktionen jeweils eine elektronische Genehmigungsanfrage für einen Kredit durch den Kreditgeber aufweisen.

7. System nach Anspruch 1, wobei das System ferner eine Einrichtung zur eindeutigen Identifizierung eines Kunden auf der Basis einer Kundenkennnummer umfasst.

8. System nach Anspruch 1, wobei das System ferner eine Kunden-Kaufdateieinrichtung zum Speichern von Daten umfasst, die sich auf die von dem Kunden eingekauften Produkte beziehen.

9. System nach Anspruch 1, wobei ein Couponsignal als Reaktion auf ein Submissionssignal erzeugt wird, das einen Kauf zum Drucken eines Nachlasscoupons anzeigt.

10. System nach Anspruch 1, wobei der genannte Laden-Controller eine Einrichtung zur Ausführung eines Filterprozesses umfasst, der dazu dient, ausgesuchte Kundenkaufdaten zu bestimmen.

11. Computer implementiertes Verfahren zur Protokollierung von Daten in einem Kassenterminalsystem eines Einzelhandelsgeschäfts, wobei das genannte Verfahren die folgenden Schritte umfasst:
(a) Lesen von Produktcodes auf Produktartikeln eines Kundenauftrags in ein Terminal an dem Standort einer Kundenkasse mit einer Registrierkasse;
(b) Speichern von Preis- und Produktkenndaten für Produktartikel in einer Artikel-Satzdatei;
(c) Zugriff auf die Artikel-Satzdatei unter Verwendung eines Laden-Controllers als Reaktion auf von dem genannten Terminal übermittelte Signale;
wobei das genannte Verfahren durch den folgenden weiteren Schritt gekennzeichnet ist:
(d) Erfassen und Speichern von Systemtestdaten, wobei die genannten erfassten und gespeicherten Systemtestdaten ein Ereignisprotokoll umfassen, das mindestens eines der folgenden Elemente aufweist: (1) Schleifenfehlerereignisse, d.h. Nachrichten, die nicht erfolgreich von der Registrierkasse zu dem Laden-Controller gelangen, (2) Terminal-Wiederherstellungs-Ereignisse, (3) Ereignisse über Preisänderungen an dem Terminal und (4) Ereignisse für Artikel, die sich nicht in der Datei befinden.

12. Verfahren nach Anspruch 11, wobei das Ereignisprotokoll mindestens zwei der folgenden Elemente aufweist: (1) Schleifenfehlerereignisse, d.h. Nachrichten, die nicht erfolgreich von der Registrierkasse zu dem Laden-Controller gelangen, (2) Terminal-Wiederherstellungs-Ereignisse, (3) Ereignisse über Preisänderungen an dem Terminal und (4) Ereignisse für Artikel, die sich nicht in der Datei befinden.

13. Verfahren nach Anspruch 11, wobei das Ereignisprotokoll mindestens drei der folgenden Elemente aufweist: (1) Schleifenfehlerereignisse, d.h. Nachrichten, die nicht erfolgreich von der Registrierkasse zu dem Laden-Controller gelangen, (2) Terminal-Wiederherstellungs-Ereignisse, (3) Ereignisse über Preisänderungen an dem Terminal und (4) Ereignisse für Artikel, die sich nicht in der Datei befinden.

14. Verfahren nach Anspruch 11, wobei das Ereignisprotokoll alle der folgenden Elemente aufweist: (1) Schleifenfehlerereignisse, d.h. Nachrichten, die nicht erfolgreich von der Registrierkasse zu dem Laden-Controller gelangen, (2) Terminal-Wiederherstellungs-Ereignisse, (3) Ereignisse über Preisänderungen an dem Terminal und (4) Ereignisse für Artikel, die sich nicht in der Datei befinden.

15. Verfahren nach Anspruch 11, wobei das Verfahren ferner die Protokollierung von Genehmigungs-Zeitauslösungsdaten zu Kreditgebern umfasst, wobei die genannten Zeitauslösungsdaten eine Anzahl der während elektronischen Submissions-Transaktionen empfangenen Zeitauslösungen umfassen.

16. Verfahren nach Anspruch 11, wobei das Verfahren ferner die Protokollierung von Genehmigungs-Zeitauslösungsdaten zu Kreditgebern umfasst, wobei die genannten Zeitauslösungsdaten eine Anzahl der während elektronischen Submissions-Transaktionen empfangenen Zeitauslösungen umfassen, wobei die genannten Submissions-Transaktionen jeweils eine elektronische Genehmigungsanfrage für einen Kredit durch den Kreditgeber aufweisen.

17. Verfahren nach Anspruch 11, ferner umfassend die eindeutige Identifizierung des Kunden auf der Basis einer Kundenkennkarte.

18. Verfahren nach Anspruch 11, ferner umfassend das Speichern von Daten, die sich auf die von dem Kunden eingekauften Produkte beziehen.

19. Verfahren nach Anspruch 11, wobei ein Couponsignal als Reaktion auf ein Submissionssignal erzeugt wird, das einen Kauf zum Drucken eines Nachlasscoupons anzeigt.

20. Verfahren nach Anspruch 11, ferner umfassend die Ausführung eines Filterprozesses zur Bestimmung ausgesuchter Kundenkaufdaten.

21. System nach Anspruch 1, wobei das System ferner eine Einrichtung zum Filtern von Transaktionsdaten zu an dem Kassenterminal von einem Kunden gekauften Artikeln nach der Identifizierung der Artikel, so dass nur die Transaktionsdaten für vorher ausgesuchte Produktartikel gespeichert werden.

22. System nach Anspruch 21, wobei die genannten Produktartikel durch UPC-Strichcodes gekennzeichnet sind, und wobei die genannte Einrichtung zum Filtern auf der Basis der UPC-Strichcodes filtert.

23. System nach Anspruch 21, wobei das genannte Filtern auf der Herstelleridentifikation jedes gekauften Produkts basiert.

24. System nach Anspruch 21, wobei das genannte Filtern auf der Identifikation einer Produktkategorie jedes gekauften Produkts basiert.

25. Verfahren nach Anspruch 11, ferner umfassend das Filtern von Transaktionsdaten zu an dem Kassenterminal von einem Kunden gekauften Artikeln auf der Basis der Identifizierung der Artikel, so dass nur die Transaktionsdaten für vorher ausgesuchte Produktartikel gespeichert werden.

26. Verfahren nach Anspruch 25, wobei die genannten Produktartikel durch UPC-Strichcodes gekennzeichnet sind, und wobei die genannte Einrichtung zum Filtern auf der Basis der UPC-Strichcodes filtert.

27. Verfahren nach Anspruch 25, wobei das genannte Filtern auf der Herstelleridentifikation jedes gekauften Produkts basiert.

28. Verfahren nach Anspruch 25, wobei das genannte Filtern auf der Identifikation einer Produktkategorie jedes gekauften Produkts basiert.
